Europäisches Patentamt

European Patent Office

Office européen des brevets

(11) Veröffentlichungsnummer: **0 461 500 A2**

(12) **EUROPÄISCHE PATENTANMELDUNG**

(21) Anmeldenummer: 91108984.5

(22) Anmeldetag: 01.06.91

(51) Int. Cl.5: **C08G 18/34**, C08G 18/38, C08G 18/79, C08G 18/80, C09D 175/04

(30) Priorität: 14.06.90 DE 4019026

(43) Veröffentlichungstag der Anmeldung: 18.12.91 Patentblatt 91/51

(84) Benannte Vertragsstaaten: AT CH DE ES FR GB IT LI NL

(71) Anmelder: BAYER AG
W-5090 Leverkusen 1 Bayerwerk(DE)

(72) Erfinder: Halpaap, Reinhard, Dr.
In der Hildscheid 6
W-5068 Odenthal(DE)
Erfinder: Dünwald, Willi, Dr.
Geschwister-Scholl-Strasse 16
W-5090 Leverkusen(DE)
Erfinder: Casselmann, Holger, Dr.
Töpferweg 36
W-5060 Bergisch Gladbach(DE)
Erfinder: Schlegel, Hans
Habichtgasse 4
W-5090 Leverkusen(DE)

(54) **Beschichtungsmittel und seine Verwendung zur Beschichtung hitzeresistenter Substrate.**

(57) Zur Herstellung von hitzebeständigen Filmen und Überzügen geeignete Beschichtungsmittel, bestehend aus

a) organischen Verbindungen mit (i) Carbodiimid- und/oder Uretonimingruppen und (ii) blockierten Isocyanat-gruppen,

b) gegebenenfalls Carboxylgruppen aufweisenden, intramolekularen Carbonsäureanhydriden des Molekulargewichtsbereichs 98 bis 500,

c) mehrwertigen Alkoholen des Molekulargewichtsbereichs 62 bis 400

und gegebenenfalls

d) weiteren Hilfs- und Zusatzmitteln und die Verwendung derartiger Beschichtungsmittel zur Beschichtung hitzeresistenter Substrate, insbesondere zur Drahtlackierung.

Die Erfindung betrifft ein neues Beschichtungsmittel für hitzeresistente Substrate, insbesondere zur Drahtlackierung, welches die Herstellung von besonders hitzeresistenten Lackierungen gestattet, wobei die lackierten Drähte bei Temperaturen von oberhalb 370° C verzinnbar sind, und die Verwendung des Beschichtungsmittels zur Beschichtung hitzeresistenter Substrate, insbesondere zur Herstellung von Drahtlackierungen.

Es ist seit vielen Jahren bekannt, unter Verwendung von Drahtlacken auf Polyurethanbasis mit einer Lackschicht versehene Drähte herzustellen, die bei vergleichsweise niederen Temperaturen von ca. 375 bis 390° C verzinnbar sind. Die Bindemittel der hierbei zum Einsatz gelangenden Drahtlacke basieren auf Kombinationen aus Polyesterpolyolen und Phenol- oder Alkanol-blockierten Polyisocyanaten (DE-AS 1 170 096 oder DE-AS 2 626 175). Eine Verbesserung der Verzinnbarkeit kann durch erhöhten Einbau von Urethangruppen in den Polymerfilm durch Kombination von blockierten Polyisocyanaten mit hydroxyfunktionellen Oligourethanen erreicht werden (DE-OS 1 644 794).

Polyurethan-Drahtlacke auf Basis der genannten Kombinationen finden breite Verwendung zur Herstellung von leicht verzinnbaren, lackierten Kupferdrähten, sie sind jedoch aufgrund ihrer nur mittelmäßigen thermischen Belastbarkeit (Temperaturindex TI nach IEC 172 = 130 bis 155° C, IEC = International Electrotechnical Commission) nicht unbeschränkt einsetzbar. Die Wärmeklassen bzw. Temperaturindizes der Isoliermaterialien für Lackdrähte sind z.B. angegeben in S. Darling, "International Wire Standards-Progress Towards Harmonization" in Proceedings 19 th EEI Conference, Chicago 25. bis 28. Sept. 1989, S. 56.

Es ist auch bekannt, Metalldrähte mit solchen Lackschichten zu versehen, die eine weit bessere thermische Dauerbelastbarkeit (Temperaturindex TI gemäß IEC 172 bei ca. 180° C aufweisen. Die zur Herstellung derartiger Lackierungen eingesetzten Drahtlacke basieren nicht auf Polyurethanen sondern auf hitzebeständigen Kunststoffen wie z.B. Polyhydantoinen (z.B. FR-PS 1 484 694, DE-PS 2 460 206), Polyamidimiden (z.B. DE-OS 3 544 548, DE-OS 3 714 033, DE-OS 3 817 614) oder Polyesteramidimiden (z.B. US-PS 3 652 471, DE-PS 3 249 497). Die mit Drahtlacken auf Basis dieser Kunststoffe lackierten Drähte sind jedoch in keinem Fall unterhalb 400° C verzinnbar. In der obengenannten Veröffentlichung von S. Darling werden zwar Polyesterimide mit einem Temperaturindex TI = 180° C als "solderable" (lötbar,. verzinnbar) bezeichnet; allerdings ist diese Verzinnbarkeit nach IEC 851 erst bei Temperaturen oberhalb 400° C gegeben. Die Anforderungen an die diversen Lackdrahttypen sind in IEC 317 beschrieben. Hier findet man z.B. für verzinnbare Polyesterimide mit einem Temperaturindex von 180° C (IEC 317, Teil 23) eine Verzinnungstemperatur von 470° C.

Aus EP-B-231 509 sind Carbodiimid- und/oder Uretonimingruppen enthaltende Polyisocyanate sowie ihre Verwendung zur Drahtlackierung bekannt. Diese Polyisocyanate eignen sich je nach Reaktionspartner zur Herstellung lötbarer Lackdrähte (Bsp. 1 der EP-B-231 509) oder aber hitzebeständiger Lackdrähte (Bsp. 3 der EP-B-231 509).

Bekannt sind auch Lackbindemittel, die Gemische aus ganz speziellen Polyamid-imiden auf Basis von Trimellithsäureanhydrid und den speziellen eben genannten blockierten Polyisocyanaten entsprechend EP-B-231 509 darstellen und die laut EP-A-291 699 hochwärmebeständige Filme liefern.

Die Verwendung niedermolekularer Zusätze zu Bindemittelsystemen auf Basis blockierter Isocyanate zur Verbesserung der technologischen Eigenschaften ist ebenfalls bereits bekannt. So werden hitzebeständige Lackdrähte nach EP-A-287 947 auch durch Verwendung ungesättigter Carbonsäuren in Kombination mit Carbodiimid- und/oder Uretonimingruppen enthaltenden Polyisocyanaten erhalten. Ebenfalls zu hitzebeständigen Lackdrähten führt die Verwendung von N,N',N''-Tris-(2-hydroxyethyl)-isocyanurat als Zusatzmittel für Drahtlacke auf Polyurethanbasis (DE-OS 3 133 571).

Zusammenfassend kann daher festgestellt werden, daß die Lehre des vorbekannten Standes der Technik sich darin erschöpft, zur Drahtlackierung entweder solche Drahtlacke einzusetzen, die zu Lackierungen einer hohen Hitzebeständigkeit (Temperaturindex TI ca. 180° C) führen oder aber solche Systeme zu verwenden, die dazu geeignet sind, lackierte Drähte herzustellen, die bei einer vergleichsweise niedrigen Temperatur (ca. 370° C) verzinnbar sind.

Es war daher die der Erfindung zugrundeliegende Aufgabe, ein Beschichtungsmittel für hitzeresistente Substrate, insbesondere zur Drahtlackierung zur Verfügung zu stellen, welches beide Vorteile (hohe Hitzebeständigkeit einerseits und Verzinnbarkeit bei vergleichsweise niederen Temperaturen andererseits) in sich vereint. Drahtlacke, die mit Beschichtungsmitteln der erfindungsgemäßen Art beschichtet sind, sollten insbesondere bei ca. 370° C gemäß IEC 851 verzinnbar sein und andererseits einen Temperaturindex TI nach IEC 172 von mindestens 180° C aufweisen, wobei das übrige Eigenschaftsbild möglichst den bekannten Drahtlacken bzw. mit derartigen Drahtlacken beschichteten Drähten entsprechen sollte.

Diese Aufgabe konnte überraschenderweise mit der Bereitstellung der nachstehend näher beschriebenen erfindungsgemäßen Beschichtungsmittel gelöst werden. Der Erfindung lag die überraschende Beob-

2

achtung zugrunde, daß die Verwendung der nachstehend näher beschriebenen Dreierkombination aus den Einzelkomponenten a), b) und c) als Bindemittel zur Lösung der genannten Aufgabe geeignet ist.

Gegenstand der Erfindung sind zur Herstellung von hitzebeständigen Filmen und Überzügen geeignete Beschichtungsmittel, bestehend aus

a) 100 Gew.-Teilen an (i) Carbodiimid- und/oder Uretonimingruppen und (ii) blockierte Isocyanatgruppen aufweisenden organischen Verbindungen,

b) 2 bis 100 Gew.-Teilen an gegebenenfalls freie Carboxylgruppen aufweisenden, intramolekularen Carbonsäureanhydriden des Molekulargewichtsbereichs 98 bis 500,

c) 2 bis 100 Gew.-Teilen an mehrwertigen Alkoholen des Molekulargewichtsbereichs 62 bis 400 und einer bei 2 bis 4 liegenden Hydroxylfunktionalität

und gegebenenfalls

d) weiteren Hilfs- und Zusatzmitteln.

Gegenstand der Erfindung ist auch die Verwendung dieses Beschichtungsmittels zur Beschichtung hitzeresistenter Substrate, insbesondere zur Drahtlackierung.

Bei der Komponente a) der erfindungsgemäßen Beschichtungsmittel handelt es sich um (i) Carbodiimid- und/oder Uretonimingruppen und (ii) blockierte Isocyanatgruppen aufweisende Verbindungen. Der Gehalt an Carbodiimidgruppen (berechnet als -N=C=N-) liegt im allgemeinen bei 0 bis 25 Gew.-%, vorzugsweise bei 1 bis 20 Gew.-%, der Gehalt an Uretonimingruppen (berechnet als Struktureinheiten der Bruttoformel $C_2N_3O$) liegt im allgemeinen bei 0 bis 30 Gew.-%, vorzugsweise bei 0 bis 25 Gew.-%, wobei die Summe aus Carbodiimid- und Uretonimingruppen (formal berechnet als -N=C=N-) im allgemeinen bei 0,5 bis 25 Gew.-%, vorzugsweise bei 1 bis 20 Gew.-%, liegt, und der Gehalt an blockierten Isocyanatgruppen (berechnet als NCO) liegt im allgemeinen bei 1 bis 25 Gew.-%, vorzugsweise bei 5 bis 22 Gew.-%.

Die Herstellung dieser Verbindungen kann dadurch erfolgen, daß man die Isocyanatgruppen eines organischen Polyisocyanats zu 10 bis 90 %, vorzugsweise 20 bis 80 % und insbesondere 30 bis 70 %, durch Reaktion mit einem monofunktionellen Blockierungsmittel für Isocyanatgruppen blockiert und anschließend die noch verbleibenden freien Isocyanatgruppen zu 65 bis 100 % unter Kohlendioxidabspaltung in Carbodiimidgruppen überführt. Die in den Verbindungen gegebenenfalls vorliegenden Uretonimingruppen entstehen durch Anlagerung der gegebenenfalls noch vorliegenden freien Isocyanatgruppen an die gebildeten Carbodiimidgruppen. Die Herstellung dieser Verbindungen ist in der EP-B-231 509 im Detail beschrieben, wobei die dort als bevorzugt herausgestellten Ausführungsformen bzw. Ausgangsmatrialien auch im Rahmen der vorliegenden Erfindung bevorzugt sind.

Bei der Komponente b) handelt es sich um beliebige intramolekulare Carbonsäureanhydride des Molekulargewichtsbereichs 98 bis 500, die gegebenenfalls neben den Anhydridgruppen auch noch freie Carboxylgruppen aufweisen können. Vorzugsweise handelt es sich bei der Komponente b) um derartige Tricarbonsäureanhydride, wie beispielsweise Trimellithsäureanhydrid, Naphthalintricarbonsäureanhydrid, 3,3',4-Benzophenontricarbonsäureanhydrid, Propantricarbonsäureanhydrid oder Butan-1,2,4-tricarbonsäureanhydrid. Ganz besonders bevorzugt werden die entsprechenden aromatischen Tricarbonsäureanhydride, insbesondere Trimellithsäureanhydrid eingesetzt. Neben den Tricarbonsäureanhydriden sind auch Tetracarbonsäuredianhydride oder Dicarbonsäureanhydride geeignet, jedoch weniger bevorzugt. Beispielhaft genannt seien: Pyromellithsäureanhydrid, Naphthalintetracarbonsäuredianhydrid, Benzophenontetracarbonsäuredianhydrid, Butantetracarbonsäuredianhydrid, Phthalsäureanhydrid, Maleinsäureanhydrid oder Bernsteinsäureanhydrid. Die beispielhaft genannten Tetracarbonsäuredianhydride und Dicarbonsäureanhydride, bei denen auch die aromatischen Vertreter bevorzugt sind, werden in der Regel, wenn überhaupt, in untergeordneten Mengen, d.h. in einer Menge von weniger als 50 Gew.-%, vorzugsweise von weniger als 30 Gew.-%, bezogen auf das Gesamtgewicht der Komponente b) neben den bevorzugten Tricarbonsäureanhydriden mitverwendet.

Bei der Komponente c) handelt es sich um mehrwertige Alkohole oder um Gemische mehrwertiger Alkohole, die ein Molekulargewicht von 62 bis 400, vorzugsweise 92 bis 300 und 2 bis 4, vorzugsweise 3 Hydroxylgruppen pro Molekül aufweisen. Geeignet sind beispielsweise Alkohole die in der EP-B 231 509, Seite 4, Zeilen 27 bis 32 genannt sind. Besonders gut geeignet sind Glycerin, Trimethylolpropan und N,N',N''-Tris-(2-hydroxyethyl)isocyanurat oder Gemische dieser dreiwertigen Alkohole.

In den erfindungsgemäßen Beschichtungsmitteln liegen die Einzelkomponenten a), b) und c) in solchen Mengen vor, daß auf 100 Gew.-Teile der Komponente a) 2 bis 100 Gew.-Teile, vorzugsweise 5 bis 40 Gew.-Teile der Komponente b) und 2 bis 100 Gew.-Teile, vorzugsweise 10 bis 80 Gew.-Teile der Komponente c) vorliegen, mit der Maßgabe, daß die Summe der Komponenten b) und c) mindestens 5 und höchstens 150 Gew.-Teile, vorzugsweise 15 bis 100 Gew.-Teile pro 100 Gew.-Teilen der Komponente a) beträgt.

Im übrigen liegen in den Bindemitteln die Einzelkomponenten a), b), c) und die gegebenenfalls mitverwendeten, nachstehend genannten Zusatzmittel d) mit freien Carboxylgruppen in solchen Mengenver-

3

hältnissen vor, daß das Verhältnis der Äquivalente A der Komponente a) zu den Äquivalenten B der gegenüber Isocyanatgruppen und/oder Carbodiimidgruppen reaktionsfähigen Gruppen der Komponenten b), c) und gegebenenfalls d) bei 0,1:1 bis 10:1, vorzugsweise 0,2:1 bis 5:1 und besonders bevorzugt 0,4:1 bis 2:1 liegt, wobei die Äquivalente A sich aus der Summe der Äquivalente an blockierten Isocyanatgruppen, an Carbodiimidgruppen, sowie an Uretonimingruppen zusammensetzen, wobei die blockierten Isocyanatgruppen und Carbodiimidgruppen jeweils als monofunktionelle Gruppen und die Uretonimingruppen als difunktionelle Gruppen in die Rechnung eingehen, und wobei die Äquivalente B sich aus der Summe der Carboxyl- und Carbonsäureanhydridäquivalente der Komponenten b) und gegebenenfalls d) und der Hydroxyläquivalente der Komponente c) zusammensetzen.

Die in den Äquivalenten B ihrerseits enthaltenen Carboxyl- und Carbonsäureanhydridäquivalente liegen im Vergleich zu den enthaltenen Hydroxyläquivalenten im Äquivalentverhältnis von 0,1:1 bis 2:1, bevorzugt von 0,2:1 bis 1:1 vor.

Die erfindungsgemäßen Beschichtungsmittel bestehen entweder aus den Bindemittelkomponenten a), b) und c) oder aus einer Kombination dieser Bindemittelkombination mit weiteren Hilfs- und Zusatzmitteln d). Vorzugsweise bestehen die gebrauchsfertigen Beschichtungsmittel aus Lösungen der Bindemittelkombination aus den Einzelkomponenten a), b) und c) in Lösungsmitteln der nachstehend genannten Art, jedoch können neben Lösungsmitteln auch noch weitere Hilfs- und Zusatzmittel d) mitverwendet werden.

Geeignete Hilfs- und Zusatzmittel d) sind z.B.

- Dicarbonsäuren des Molekulargewichtsbereichs 118 bis 300 wie z.B. Bernsteinsäure, Adipinsäure, Azelainsäure, Terephthalsäure, Isophthalsäure oder 2,6-Naphthalindicarbonsäure, wobei die aromatischen Dicarbonsäuren gegenüber den aliphatischen Dicarbonsäuren bevorzugt sind. Derartige freie Dicarbonsäuren werden, falls überhaupt, in Mengen von bis zu 50 Gew.-%, vorzugsweise bis zu 30 Gew.-%, bezogen auf das Gewicht der Komponente b) mitverwendet.

- Lösungsmittel, wobei alle an sich bekannten üblichen Lacklösungsmittel wie z.B. Ethylacetat, Butylacetat, Ethylenglykolmonomethyl- oder -ethyletheracetat, 1-Methoxypropyl-2-acetat, 2-Butanon, 4-Methyl-2-pentanon, Cyclohexanon, Toluol, Xylol, Solventnaphtha oder deren Gemische geeignet sind. Insbesondere geeignet sind jedoch auch solche Lösungsmittel wie sie im allgemeinen bei der Drahtlackierung zum Einsatz gelangen wie z.B. phenolische Lösungsmittel wie Phenol, Kresol und/oder Xylenol oder aber auch N-Methylpyrrolidon und/oder N-Methylcaprolactam.

Ebenfalls als Lösungsmittel verwendbar, jedoch weniger bevorzugt sind Weichmacher wie z.B. solche auf Basis von Phosphorsäure-, Sulfonsäure- oder Phthalsäureester.

Für die erfindungsgemäß bevorzugte Drahtlackierung werden im allgemeinen 15- bis 75-, insbesondere 20- bis 60-gew.-%ige Lösungen der Bindemittelkombination eingesetzt. Die gebrauchsfertigen Drahtlacke weisen demzufolge im allgemeinen einen Lösungsmittelgehalt von 25 bis 85, vorzugsweise von 40 bis 80 Gew.-%, bezogen auf das Gesamtgewicht des Drahtlacks, auf.

- Katalysatoren der aus der Polyurethanchemie an sich bekannten Art, wie sie beispielsweise im Kunststoffhandbuch (Hrsg. Becker/Braun), Bd. 7, Polyurethane, S. 92 ff., Carl Hanser Verlag, München Wien 1983, beschrieben sind. Geeignet sind beispielsweise auch die in DE-AS 2 626 175, Kolonne 7, Zeile 35 bis Kolonne 8, Zeile 27, beschriebenen Katalysatoren. Besonders geeignet sind organische Metallkatalysatoren wie insbesondere organische Titan-, Zink- oder Zinnverbindungen wie Tetraisopropyltitanat, Zinkoctoat, Dibutylzinnoxid oder Dibutylzinndilaurat. Gut geeignet sind auch Umsetzungsprodukte von Aminen mit Carbonylverbindungen beispielsweise Aldimine auf Basis aliphatischer Aldehyde wie z.B. Butyraldehyd und aromatischer Amine wie z.B. Anilin. Die Katalysatoren werden, falls überhaupt, in einer Menge von 0,01 bis 5,0, vorzugsweise 0,1 bis 3,0 Gew.-%, bezogen auf die erfindungsgemäßen Bindemittelgemische eingesetzt. Häufig reichen jedoch die in den üblichen Einbrennkanälen für Drahtlacke vorherrschenden Temperaturen aus, um die Umsetzung, d.h. die Aushärtung der Lacke auch ohne Zusatz eines Katalysators innerhalb eines ausreichend kurzen Zeitraumes zu gewährleisten.

- oligomere oder polymere Verbindungen, wie sie bislang bei der Drahtlackierung zum Einsatz gelangten. Die Mitverwendung derartiger, weiterer Bindemittelkomponenten ist jedoch weniger bevorzugt.

- Pigmente wie beispielsweise Titandioxid.

Die erfindungsgemäßen Beschichtungsmittel sind bei Raumtemperatur oder mäßig erhöhter Temperatur (bis ca. 50 °C) lagerbeständig und reagieren beim Erhitzen auf Temperaturen von oberhalb 80 °C, vorzugsweise von 100 bis 500 °C und insbesondere von 180 bis 400 °C unter gleichzeitigem Verdampfen der gegebenenfalls vorliegenden flüchtigen Bestandteile (z.B. Lösungsmittel) zu vernetzten Kunststoffen ab.

Die erfindungsgemäßen Bindemittel eignen sich als Einbrennlacke zur Lackierung von beliebigen hitzeresistenten Substraten, beispielsweise Metallen, Keramik, Glasfasern oder -Geweben, besonders bevorzugt von Metalldrähten Die erfindungsgemäßen Kombinationen, gegebenenfalls in Abmischung mit Hilfs- und Zusatzmitteln der genannten Art, können nach allen Methoden der Beschichtungstechnologie auf die Substrate aufgetragen werden, worauf sich eine Aushärtung der Beschichtug der obengenannten Temperaturbereiche anschließt.

Bei der bevorzugten Drahtlackierung erfolgt die Beschichtung der Drähte nach den an sich bekannten Tauch-, Rollenauftrags- oder Saugfilzverfahren, worauf sich die Trocknung, d.h. die Aushärtung der Lackschichten in den üblichen Trockenöfen innerhalb der genannten Temperaturbereiche anschließt.

Bei der Verwendung der erfindungsgemäßen Bindemittel für Drahtlackierungen sind insbesondere die hervorragende Haftung auf dem Draht, die sehr gute Flexibilität, die hohen Werte für Abriebfestigkeit, Hitzeschock, Erweichungstemperatur und dielektrischen Verlustfaktor, sowie die gute Lösemittelbeständigkeit hervorzuheben.

In den nachfolgenden Beispielen beziehen sich alle Prozentangaben auf Gewichtsprozente. Die Gehalte an blockierten NCO-Gruppen wurden als "NCO" d.h. unter Zugrundelegung eines Molekulargewichtes von 42, die Gehalte an NCN-Gruppen unter Zugrundelegung eines Molekulargewichtes von 40 berechnet.

Beispiele

Herstellung einer Lösung eines Carbodiimidgruppenhaltigen blockierten Polyisocyanats I (nach EP-B 231 509):

Eine Mischung aus 174 g 2,4-Diisocyanatotoluol und 2,6-Diisocyanatotoluol (Gewichtsverhältnis 8:2) und 250 g 4,4'-Diisocyanatodiphenylmethan wird beginnend bei 80 °C innerhalb ca. 30 Minuten mit 2161 g Kresol (technisches Isomerengemisch) versetzt und 6 Stunden bei 120 °C gehalten. Nach Erreichen eines NCO-Gehalts von 13,0 % ($NCO_{theor.}$ = 13,1 %) wird mit 256 g 1-Methoxypropyl-2-acetat verdünnt.

Man katalysiert die Carbodiimidbildung durch Zugabe von 2,0 g eines technischen Gemisches aus 1-Methyl-1-phospha-2-cyclopenten-1-oxid und 1-Methyl-1-phospha-3-cyclopenten-1-oxid bei 60 °C. Nach ca. 15 h waren 22 l $CO_2$ abgespalten (ca. 92 %).

Man erhält eine Lösung eines blockierten Polyisocyanats mit folgenden Kenndaten:

**Konzentration:** ca. 70 Gew.-%

**Viskosität:** (23° C) = 28000 mPa.s

**blockierter NCO-Gehalt (berechnet):** 9,9 %

**NCN-Gehalt (berechnet):** 4,7 %

Beispiel 1

359 Gew.-Teile der Lösung des Polyisocyanats I werden mit 542,2 Gew.-Teilen N-Methylpyrrolidon vermischt und anschließend mit 40,5 Gew.-Teilen Trimellithsäureanhydrid und 58,3 Gew.-Teilen N,N',N''-Tris-(2-hydroxyethyl)isocyanurat versetzt. Zu der erhaltenen Lösung werden 3,5 Gew.-Teile eines Aldimins aus Anilin und Butyraldehyd als Katalysator zugegeben.

Festkörper 35 %

Auslaufzeit (4-mm-DIN-Becher): 30 s

Die Auslaufzeit ist nach 3 Monaten Lagerung bei Raumtemperatur unverändert.

Verwendung:

Auf einer vertikalen Umluft-Drahtlackieranlage der Fa. MAG, Graz/Österreich, Typ VE5 mit einer Ofenlänge von 4,5 m wird ein Kupferdraht von 0,3 mm Durchmesser mittels Düsenabstreifer in 7 Durchzügen (Düsenabstufung 0,33 bis 0,39 mm; Schritt 0,01 mm) bei einer Ofentemperatur von 400 °C mit einer Geschwindigkeit von 90 m/min lackiert.

Der Lackdraht ist bei 370 °C innerhalb von 6 s verzinnbar (IEC 851) der tan-δ-Knickpunkt (IEC 851, Teil 5; Prüf. 19) liegt bei 200 °C, die Erweichungstemperatur nach IEC 851, Teil 6; 4.1.2 beträgt 260 °C. Der Lackfilm zeigt eine hohe Flexibilität: nach 20 % Vordehnung läßt sich der Draht um einen zylindrischen Dorn von 0,3 mm wickeln, ohne daß der Lackfilm Risse aufweist. Der Lackdraht hat einen Temperaturindex (IEC 172) von 180 °C.

Beispiel 2

307 Gew.-Teile der Lösung des Polyisocyanates I werden mit 456 Gew.-Teilen Kresol und 152 Gew.-Teilen Xylol vermischt und anschließend mit 35 Gew.-Teilen Trimellithsäureanhydrid sowie mit 50 Gew.-Teilen N,N',N''-Tris(2-hydroxyethyl)isocyanurat versetzt. Zu der erhaltenen Lösung werden 3 Gew.-Teile eines Aldimins aus Anilin und Butyraldehyd als Katalysator zugegeben. Der Lack ist für die Applikation mit Düsen geeignet.
Festkörper 30 %
Auslaufzeit (4-mm-DIN-Becher): 130 s
Die Auslaufzeit ist nach 3 Monaten Lagerung bei Raumtemperatur unverändert.

Beispiel 3

307 Gew.-Teile der Lösung des Polyisocyanats I werden mit 405,3 Gew.-Teilen N-Methylpyrrolidon und 202,7 Gew.-Teilen Cyclohexanon vermischt und anschließend mit 35 Gew.-Teilen N,N',N''-Tris(2-hydroxyethyl)isocyanurat versetzt. Zu der erhaltenen Lösung werden 3 Gew.-Teile eines Aldimins aus Anilin und Butyraldehyd als Katalysator zugegeben. Der Lack ist für die Applikation mit Filzabstreifer geeignet.
Festkörper 30 %
Auslaufzeit (4-mm-DIN-Becher): 30 s
Die Auslaufzeit ist nach 3 Monaten Lagerung bei Raumtemperatur unverändert.

Beispiel 4

295,3 Gew.-Teile der Lösung des Polyisocyanats I werden mit 152,9 Gew.-Teilen N-Methylpyrrolidon und 458,5 Gew.-Teilen Cyclohexanon vermischt und anschließend mit 33,3 Gew.-Teilen Trimellithsäureanhydrid sowie mit 60 Gew.-Teilen N,N',N''-Tris(2-hydroxyethyl)isocyanurat versetzt. Zu der erhaltenen Lösung werden 3 Gew.-Teile Zinkoctoat (8 % Zn) als Katalysator zugegeben.
Festkörper 30 %
Auslaufzeit (4-mm-DIN-Becher): 25 s
Verwendung:
Auf einer vertikalen Drahtlackieranlage mit einer Ofenlänge von 4 m wird ein Kupferdraht von 0,7 mm Durchmesser mittels Filzabstreifer in 6 Durchzügen auf eine Durchmesserzunahme von 45 bis 50 μm lackiert. Bei einer Ofentemperatur von 400°C kann die Lackiergeschwindigkeit von 10 bis 22 m/min variiert werden, ohne daß der Lackfilm beim Dehnen des Drahtes bis zum Bruch Risse zeigt. Bei einer Lackiergeschwindigkeit von 14 m/min ist der Lackdraht bei 370°C (gemäß IEC 851) innerhalb von 6 s verzinnbar, der Hitzeschock (IEC 851, Teil 6; 3.1) beträgt mehr als 260°C. Der Lackdraht hat einen Temperaturindex (IEC 172) von 180°C.

Beispiel 5

246 Gew.-Teile der Lösung des Polyisocyanats I werden mit 313 Gew.-Teilen Cyclohexanon und 313 Gew.-Teilen N-Methylpyrrolidon vermischt und anschließend mit 28 Gew.-Teilen Trimellithsäureanhydrid sowie mit 100 Gew.-Teilen N,N',N''-Tris(2-hydroxyethyl)isocyanurat versetzt. Zu der erhaltenen Lösung werden 3 Gew.-Teile eines Aldimins aus Anilin und Butyraldehyd als Katalysator zugegeben.
Festkörper 30 %
Auslaufzeit (4-mm-DIN-Becher): 16 s
Die Auslaufzeit ist nach 3 Monaten Lagerung bei Raumtemperatur unverändert.
Verwendung:
Auf einer vertikalen Drahtlackieranlage mit einer Ofenlänge von 4 m wird ein Kupferdraht von 0,7 mm Durchmesser mittels Filzabstreifer in 6 Durchzügen auf eine Durchmesserzunahme von 45 bis 55 μm lackiert. Bei einer Ofentemperatur von 400°C kann die Lackiergeschwindigkeit von 10 bis 20 m/min variiert werden, ohne daß der Lackfilm beim Dehnen des Drahtes bis zum Bruch Risse zeigt. Bei einer Lackiergeschwindigkeit von 14 m/min ist der Lackdraht bei 370°C innerhalb von 4 s verzinnbar (IEC 851). Der tan-δ-Knickpunkt (IEC 851, Teil 5, Prüf. 19) liegt bei 180°C.

**Patentansprüche**

1. Zur Herstellung von hitzebeständigen Filmen und Überzügen geeignete Beschichtungsmittel, bestehend aus

a) 100 Gew.-Teilen an (i) Carbodiimid- und/oder Uretonimingruppen und (ii) blockierte Isocyanatgruppen aufweisenden organischen Verbindungen,

b) 2 bis 100 Gew.-Teilen an gegebenenfalls freie Carboxylgruppen aufweisenden, intramolekularen Carbonsäureanhydriden des Molekulargewichtsbereichs 98 bis 500,

c) 2 bis 100 Gew.-Teilen an mehrwertigen Alkoholen des Molekulargewichtsbereichs 62 bis 400 und einer bei 2 bis 4 liegenden Hydroxylfunktionalität

und gegebenenfalls

d) weiteren Hilfs- und Zusatzmitteln.

2. Beschichtungsmittel gemäß Anspruch 1, dadurch gekennzeichnet, daß die Komponente a) 0 bis 25 Gew.-% an Carbodiimidgruppen (berechnet als NCN), 0 bis 30 Gew.-% an Uretonimingruppen (berechnet als Struktureinheiten der Bruttoformel $C_2N_3O$), wobei die Summe aus Carbodiimid- und Uretonimingruppen (formal berechnet als NCN) bei 0,5 bis 25 Gew.-% liegt, und einen Gehalt an blockierten Isocyanatgruppen (berechnet als NCO) von 1 bis 25 Gew.-% aufweist.

3. Beschichtungsmittel gemäß Ansprüchen 1 und 2, dadurch gekennzeichnet, daß die Komponente b) ein Tricarbonsäuremonoanhydrid ist.

4. Beschichtungsmittel gemäß Ansprüchen 1 bis 3, dadurch gekennzeichnet, daß die Komponente b) Trimellithsäureanhydrid ist.

5. Beschichtungsmittel gemäß Ansprüchen 1 bis 4, dadurch gekennzeichnet, daß die Komponente c) eine Alkoholkomponente darstellt, die ausgewählt ist aus der Gruppe bestehend aus Glycerin, Trimethylolpropan, N,N',N''-Tris-(2-hydroxyethyl)isocyanurat und Gemischen dieser dreiwertigen Alkohole.

6. Verwendung der Beschichtungsmittel gemäß Ansprüchen 1 bis 5 zur Beschichtung hitzeresistenter Substrate.

7. Verwendung der Beschichtungsmittel gemäß Ansprüchen 1 bis 5 zur Drahtlackierung.